# EUROPÄISCHE PATENTANMELDUNG

(11) **EP 4 357 196 A2**
(43) Veröffentlichungstag der Anmeldung: **24.04.2024**
(21) Anmeldenummer: 23192736.9
(22) Anmeldetag: 22.08.2023
(51) Int. Cl.: B60P 7/08

(54) **SCHWENKBARER ZURRPUNKT FÜR DIE LADEFLÄCHE EINES TRANSPORTFAHRZEUGES**

(30) Priorität: 15.09.2022 DE 202022105208 U
(71) Anmelder: Thiele GmbH & Co. KG, 58640 Iserlohn (DE)
(72) Erfinder: Bermejo, Enrique, 58640 Iserlohn (DE); Norpoth, Bernhard, 45309 Essen (DE)
(74) Vertreter: Osterhoff, Utz

(57) **Zusammenfassung**

Die vorliegende Erfindung betrifft einen Zurrpunkt (1) an einer Ladefläche (2) eines Transportfahrzeuges, wobei der Zurrpunkt (1) mit einem Zurrmittel gekoppelt wird, indem ein Ösenkörper (3) relativ beweglich in zwei seitlich angeordneten Kulissenblechen (6) gelagert ist und von einer Ruhestellung in eine Montage- oder Gebrauchsstellung bringbar ist, wobei der Ösenkörper (3) seitlich überstehende Arme (4) aufweist, die in die Kulissenführung (5) eingreifen, wobei die Kulisse zwei Bereiche (12, 13) aufweist, einen unteren schlitzartigen Bereich (12), dergestalt, dass der Ösenkörper (3) mit seiner Öse nach unten hängend in der Ruhestellung angeordnet ist, und einen zweiten oberen ringförmigen Bereich (13), dergestalt, dass der Ösenkörper (3) mittels einer Schwenkbewegung (S) in die Montagestellung bringbar ist, wobei der Ösenkörper (3) von dem unteren schlitzartigen Bereich (12) in den oberen ringförmigen Bereich (13) mittels einer translatorischen Bewegung herausziehbar ist.

## Beschreibung

Die vorliegende Erfindung betrifft einen Zurrpunkt an einer Ladefläche eines Transportfahrzeuges gemäß den Merkmalen im Oberbegriff von Anspruch 1.

Die vorliegende Erfindung betrifft ferner einen Zurrpunkt an einer Ladefläche gemäß den Merkmalen im Oberbegriff von Anspruch 2.

Die vorliegende Erfindung betrifft darüber hinaus einen Zurrpunkt zur Anordnung an einer Ladefläche eines Transportfahrzeuges gemäß den Merkmalen im Oberbegriff von Anspruch 3.

Aus dem Stand der Technik ist es bekannt, zum lösbaren Befestigen von Zurrmitteln Zurrpunkte bzw. Anschlagpunkte zu verwenden. Insbesondere bei der Befestigung von Lasten bzw. Ladungen auf einem Transportfahrzeug werden solche Zurrpunkte an oder in der Ladefläche angeordnet. Ein solches Transportfahrzeug ist in der Regel ein Auflieger eines Lastkraftwagens.

Beispielsweise ist aus der DE 20 2008 008 418 U1 ein gattungsbildender Zurrpunkt in einer Begrenzung einer Ladefläche eines Transportfahrzeuges bekannt. Der gesamte Inhalt vorbezeichneter Gebrauchsmusterschrift wird durch Referenz mit in den Offenbarungsgehalt dieses Dokumentes einbezogen.

Ein solcher Zurrpunkt ist somit in einer Ruhestellung versenkt gelagert, so dass er nicht gegenüber einer Ladefläche oben oder seitlich übersteht. Das Rangieren von Ladung auf der Ladefläche ist ohne Beeinflussung durch den Zurrpunkt möglich. Auch ein anwendender Monteur kann somit über die Ladefläche laufen, ohne über einen entsprechenden Zurrpunkt zu stolpern.

Wird nunmehr der Zurrpunkt zum Befestigen eines Zurrmittels gebraucht, so ist er in eine Gebrauchsstellung zu bringen, welche nachfolgend auch Montageposition bzw. Montagestellung genannt wird. Hierzu wird der Ösenkörper des Zurrpunktes aus einer Kassette herausgezogen und das Zurrmittel mit diesem gekoppelt. In der Regel wird ein Haken in den Ösenkörper eingehakt. Nachteilig ist, dass durch Einwirken der Schwerkraft die Zurröse alleine oder teilweise selbst mit montiertem, noch losem, Zurrmittel wieder eigenständig in die Ruhestellung fällt und der Monteur zur korrekten Montage bereits eine Hand für das Fixieren der Zurröse nutzen muss. Das Spannen des Zurrmittels gestaltet sich dadurch ungleich schwieriger.

Die Kassetten sind selbst als Schweißbauteil ausgebildet. Ist die Kassette mit dem Ösenkörper zusammengesetzt, so wird dies als eine Baueinheit an- bzw. in der Ladefläche des Transportfahrzeuges verschweißt, ohne dass der Ösenkörper demontierbar ist.

Aufgabe der vorliegenden Erfindung ist es, ausgehend vom Stand der Technik einen Zurrpunkt zur Anordnung an einer Ladefläche bereit zu stellen, der gegenüber aus dem Stand der Technik bekannten Zurrpunkten eine höhere Belastbarkeit sowie eine verbesserte Anwendbarkeit aufweist.

Die zuvor genannte Aufgabe wird mit einem Zurrpunkt erfindungsgemäß mit den Merkmalen im Anspruch 1 gelöst.

Die zuvor genannte Aufgabe wird in einer alternativen und ergänzenden Ausgestaltungsvariante gemäß den Merkmalen im Anspruch 2 gelöst.

Die vorliegende Aufgabe wird darüber hinaus in einer alternativen und ergänzenden Ausgestaltungsvariante gemäß den Merkmalen im Anspruch 3 gelöst.

Vorteilhafte Ausgestaltungsvarianten der vorliegenden Erfindung sind Gegenstand der abhängigen Ansprüche.

Der erfindungsgemäße Zurrpunkt ist zur Anordnung an einer Ladefläche eines Transportfahrzeuges verwendet. Es kann somit auch als Ladeflächenzurrpunkt bzw. Transportfahrzeugzurrpunkt bezeichnet werden.

Der Zurrpunkt ist an der Ladefläche eines Transportfahrzeuges angeordnet und kann mit einem Zurrmittel gekoppelt werden. Dies kann ein Anschlaghaken, ein Spannband oder ein ähnliches Zurrmittel sein. Der Zurrpunkt selbst weist einen Ösenkörper auf, der relativ beweglich in zwei seitlich angeordneten Kulissenblechen gelagert ist und von einer Ruhestellung in eine Montage- bzw. Gebrauchsstellung bringbar ist. Die Kulissenbleche sind bevorzugt an oder in der Ladefläche bzw. an oder in einem Rahmen des Transportfahrzeuges angeordnet bzw. verschweißt. Die Kulissenbleche selbst sowie auch der Ösenkörper sind aus einem metallischen Werkstoff, insbesondere einem Stahlwerkstoff, hergestellt.

Der Ösenkörper selbst weist seitlich überstehende Arme auf, wobei die Arme in die Kulissenführung eingreifen.

Gemäß einer ersten Ausgestaltungsvariante der Erfindung zeichnet sich die Kulisse bzw. die Kulissenführung dadurch aus, dass diese in zwei Bereiche eingeteilt ist. Dies ist ein auf die Vertikalrichtung bezogen unterer schlitzartiger Bereich und ein auf die Vertikalrichtung bezogen dazu oberer ringförmiger Bereich.

Der schlitzartige Bereich wird dazu genutzt, dass der Ösenkörper in einer Ruhestellung angeordnet in diesem verharrt. Der Ösenkörper selbst ist aufgrund der Erdanziehungskraft in dem unteren Schlitzbereich somit angeordnet. Der Ösenkörper zeigt dabei mit seiner Öse auf die Vertikalrichtung bezogen nach unten hängend in der Ruhestellung.

Der Ösenkörper kann dann durch eine translatorische bzw. Schiebebewegung von dem unteren schlitzartigen Bereich in einen oberen ringförmigen Bereich überführt werden. Der obere ringförmige Bereich dient weiterhin dazu, dass der Ösenkörper in dem ringförmigen Bereich schwenkbar gelagert ist und somit eine Schwenkbewegung ausführen kann, so dass dieser von der Ruhestellung in eine Montagestellung bzw. eine Gebrauchsstellung überführt werden kann. Die Schwenkbewegung ist insbesondere derart ausgestaltet, dass die Öse bezogen auf die Ladefläche nach außen geschwenkt wird und dann durch die Schwenkbewegung zumindest teilweise oberhalb der Ladefläche angeordnet ist bzw. auf die Ladefläche zuzeigend angeordnet ist und in Richtung zur Ladefläche geschwenkt angeordnet ist.

Der Ösenkörper weist bevorzugt an seiner zur Ladefläche gerichteten Seite einen Stütznocken auf, mit welchem er in der Montage- bzw. Gebrauchsstellung schräg an der Ladefläche abgelegt werden kann. Aufgrund der Erdanziehungskraft liegt der Stütznocken dann auf einem Randbereich der Ladefläche bzw. einer Aussparung auf. Der Ösenkörper kann dann angeschlagen werden an das Zurrmittel, ohne dass der Ösenkörper gleichzeitig von einer Hand eines Monteurs gegen Wegrutschen gehalten bzw. gesichert werden muss.

Alle zuvor genannten Merkmale können beliebig untereinander mit den nachfolgenden Merkmalen kombiniert werden, ohne dabei den Offenbarungsgehalt der Erfindung zu verlassen.

In einer weiteren Ausgestaltungsvariante zeichnet sich der Ösenkörper dadurch aus, dass er in der Ruhestellung mit der Öse nach unten zeigend angeordnet ist und dies in einem Winkel größer 3 Grad, insbesondere zwischen 5 und 25 Grad, bevorzugt zwischen 10 und 20 Grad, ganz besonders bevorzugt ca. 15 Grad zu einer Vertikalen hängend angeordnet ist. Der Winkel ist dabei von einer Ladebordwand bzw. einer Rahmenwand weg zeigend orientiert. Dies bietet erfindungsgemäß den Vorteil, dass die Öse nach unten hängend in der Ruhestellung verbleibt und gleichzeitig nicht klappernd an dem Rahmen bzw. die Ladefläche anschlägt. Somit ist ein Lärmschutz aufgrund der erfindungsgemäßen Aufbewahrung gegeben.

Insbesondere kann dies durch den schlitzartigen unteren Bereich der Kulissenführung realisiert werden. Die Öse bzw. die seitlich abstehenden Arme der Öse sind hierzu im Querschnitt durch zwei parallele, gegenüber liegende Geraden ausgebildet. Die Geraden liegen dann in dem schlitzartigen Bereich der Kulissenführung. Der schlitzartige Bereich der Kulissenführung ist ebenfalls in dem zuvor genannten Winkel angeordnet, so dass die Öse, insbesondere eine Mittellängsebene des Ösenkörpers, in dem zuvor genannten Winkel zu dem Rahmen bzw. einem vertikal orientierten Stück des Rahmens bzw. der Ladebordwand insbesondere nach außen zeigend schräg angeordnet ist.

Eine weitere vorteilhafte Ausgestaltungsvariante der Erfindung sieht vor, das eine innenliegende umlaufende Kante der Kulisse bzw. der Kulissenführung abgerundet oder abgeflacht bzw. abgeschrägt ausgebildet ist. Dies bietet erfindungsgemäß den Vorteil, dass insbesondere die Belastbarkeit des erfindungsgemäßen Zurrpunkts gesteigert wird. Gegenüber einer innenliegenden umlaufenden Kante der Kulissenführung nicht abgerundet bzw. nicht abgeflachten Variante ist hier die Gefahr eines Einschneidens bzw. Einschnürens gegeben. Dies wird erfindungsgemäß durch die abgerundete bzw. abgeflachte Kante vermieden.

Hierzu ist insbesondere ein jedes der Kulissenbleche als Schmiedebauteil hergestellt.

Durch die Herstellung als Schmiedebauteil kann zum einen die umlaufende Kante abgerundet bzw. abgeflacht durch den Schmiedeprozess hergestellt werden.

Alternativ oder ergänzend kann durch den Schmiedeprozess auch die Festigkeit der Kulissenbleche weiter gesteigert werden, so dass sich die Belastbarkeit des Zurrpunktes erhöht.

Weitere Vorteile, Merkmale, Eigenschaften und Aspekte der vorliegenden Erfindung sind Gegenstand der nachfolgenden Beschreibung. Bevorzugte Ausgestaltungsvarianten werden in den schematischen Figuren dargestellt. Diese dienen dem einfachen Verständnis der Erfindung. Es zeigen:
- Figur 1 bis 10: eine erste Ausgestaltungsvariante des erfindungsgemäßen Zurrpunktes mit zweiteiligen Kulissenblechen und
- Figur 11 bis 14: eine zweite Ausgestaltungsvariante des erfindungsgemäßen Zurrpunktes mit geschmiedeten Kulissenblechen

In den Figuren werden für gleiche oder ähnliche Bauteile dieselben Bezugszeichen verwendet, auch wenn eine wiederholte Beschreibung aus Vereinfachungsgründen entfällt.

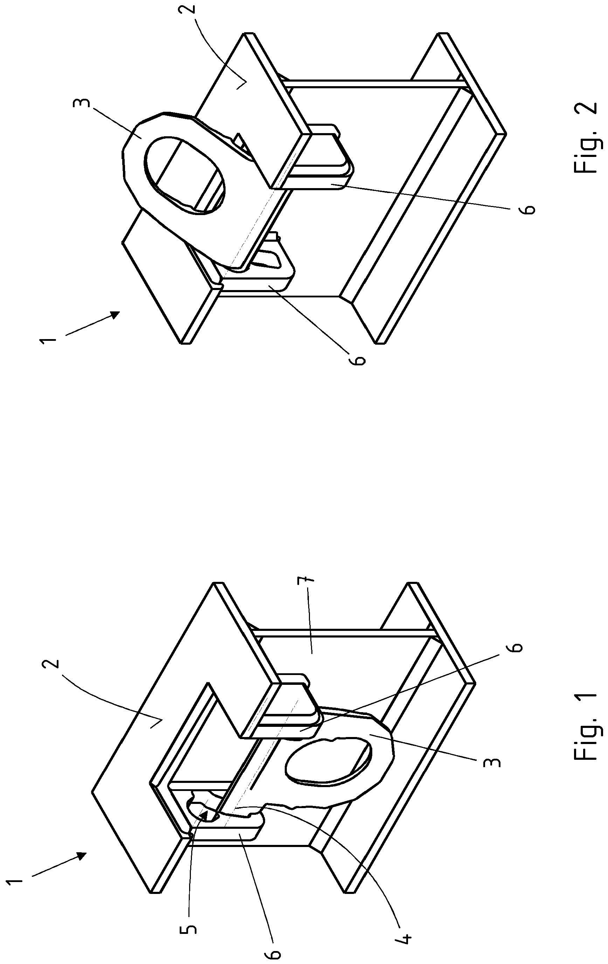

Figuren 1 und 2 zeigen einen erfindungsgemäßen Zurrpunkt 1 an einer Ladefläche 2 eines nicht näher dargestellten Transportfahrzeuges. Im Falle von Figur 1 ist der Zurrpunkt 1 bzw. der Ösenkörper 3 unterhalb der Ladefläche 2 angeordnet und befindet sich somit in der Ruhestellung. In Figur 2 ist der Ösenkörper 3 des Zurrpunktes 1 in Montagestellung angeordnet. Der Ösenkörper 3 steht hierzu zumindest teilweise über die Ladefläche 2 hinausragend und zu einer nicht näher dargestellten Mitte der Ladefläche 2 hin orientiert zeigend über. Damit die Bewegung von Ruhestellung zu Montagestellung möglich ist, ist der Ösenkörper 3 mit seitlich überstehenden Armen 4 in einer jeweiligen Kulissenführung 5 eines Kulissenbleches 6 angeordnet. Die Kulissenbleche 6 sind dabei an einen umlaufenden Rahmen 7 der Ladefläche 2 gekoppelt, insbesondere verschweißt.

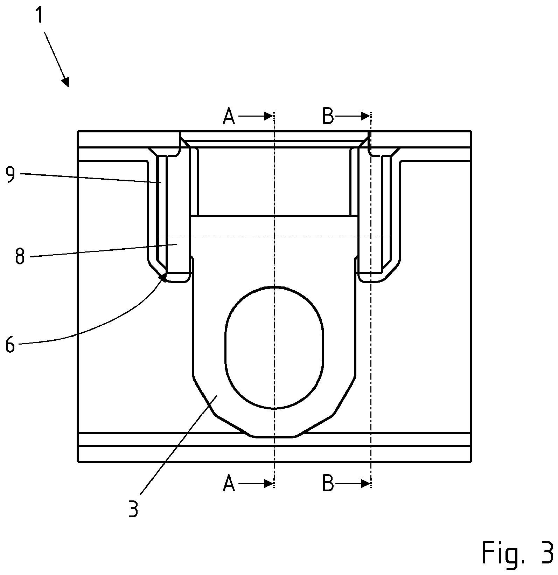

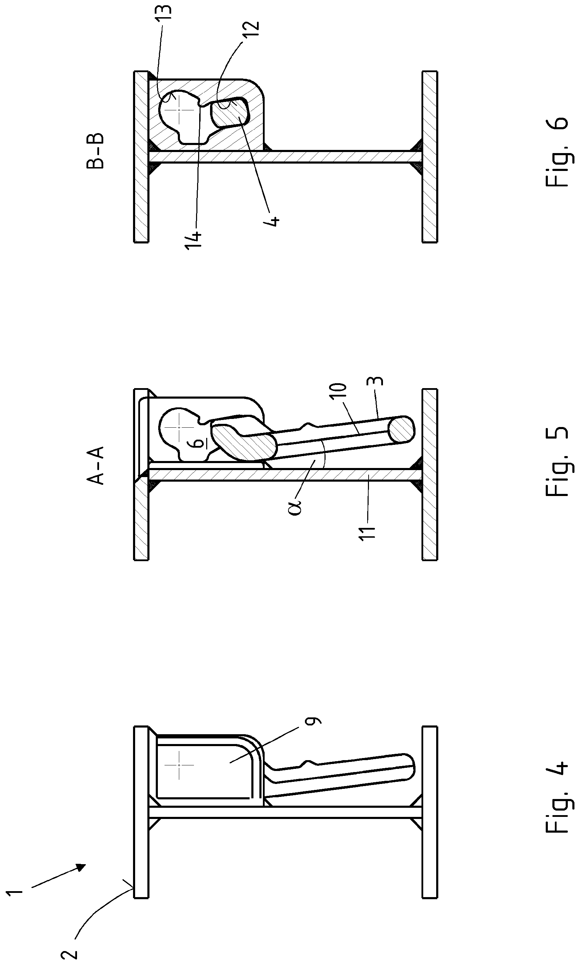

Figur 3 zeigt eine Seitenansicht gemäß Figur 1 des Ösenkörpers 3 in der Kulissenführung 5. Die Kulissenbleche 6 selbst sind zweiteilig bzw. zweilagig ausgebildet. Zum einen ist dies das eigentliche Kulissenblech 8 mit der Kulissenführung 5. Zum anderen ist dies ein außen übergreifendes Verstärkungsblech 9. Das Verstärkungsblech 9 ist vollständig umlaufend mit dem Kulissenblech 8 mit der Kulissenführung 5 verschweißt. Das Verstärkungsblech 9 selbst ist durchgehend ausgebildet, was insbesondere in der Figur 4 dargestellt ist. Eine eventuelle Schwächung des Kulissenbleches 8 aufgrund der Kulissenführung 5 selbst wird durch das Verstärkungsblech 9 kompensiert.

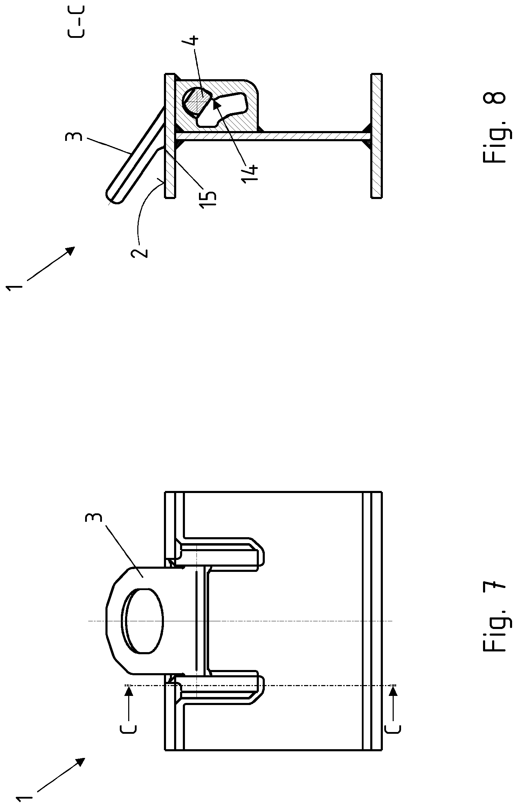

Figur 5 und 6 zeigen jeweilige Schnittansichten gemäß der Schnittlinien A - A und B - B gemäß Figur 3. Insbesondere ist in Figur 5 zu erkennen, dass der Ösenkörper 3 bzw. eine Mittellängsebene 10 des Ösenkörpers 3 in einem Winkel α zu einer Vertikalen bzw. einer vertikal umlaufenden Wand 11 des Rahmens 7 verlaufend angeordnet ist. Insbesondere zeigt der Ösenkörper 3 bzw. die Mittellängsebene 10 mit dem Winkel α von der Wand 11 des Rahmens 7 weg. Somit kann in der in Figur 5 dargestellten Ruhestellung der Ösenkörper 3 nicht klappern bzw. an den Rahmen 7 anschlagen, was zu Klappergeräuschen führen würde. Somit ist ein effektiver Lärmschutz gegeben. Hierzu weist die Kulissenführung 5 einen unteren schlitzförmigen Bereich 12 der Kulisse bzw. Kulissenführung 5 auf, in welchem die Arme 4 eingreifen. Die Arme 4 sind durch zwei parallel zueinander beabstandete Geraden ausgebildet. Die Geraden liegen dann in dem unteren schlitzförmigen Bereich 12 unter Berücksichtigung einer gewissen Toleranz, so dass es zu keinem Verkanten oder Verklemmen kommt, an und sorgen dafür, dass der in Figur 5 dargestellte Winkel α eingehalten ist. Ferner weist die Kulissenführung 5 einen oberen ringförmigen Bereich 13 auf. Die Arme 4 des Ösenkörpers 3 weisen an den Geraden jeweils versetzt gegenüberliegende bogenförmige Abschnitte auf. Mit den bogenförmigen Abschnitten kann der Ösenkörper 3 dann in dem ringförmigen Bereich 13 eine Schwenkbewegung S ausführen. Ferner ist eine in die Kulissenführung 5 vorstehende Nase 14 ausgebildet, so dass der Ösenkörper 3 in Montagestellung in der in Figur 8 dargestellten Position an der Nase 14 mit den Armen 4 anliegt und in der darstellten Montagesstellung verbleibt. Hierzu ist an der Rückseite des Ösenkörpers 3 ein Stütznocken 15 ausgebildet, mit welchem der Ösenkörper 3 auf der Ladefläche 2 zumindest teilweise aufliegt, so dass ein Herabrutschen aus der in Figur 7 bzw. 8 dargestellten Montagestellung ohne zusätzliches Festhalten des Ösenkörpers 3 sicher vermieden ist.

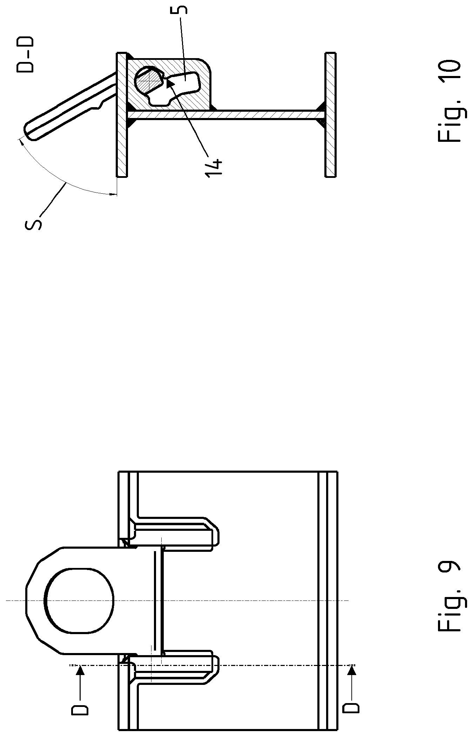

Ferner ist in Figur 9 und 10 eine Möglichkeit der Schwenkbewegung S dargestellt, so dass der Ösenkörper 3 von der in Figur 8 dargestellten Montagestellung in eine weitere Gebrauchsstellung bringbar ist.

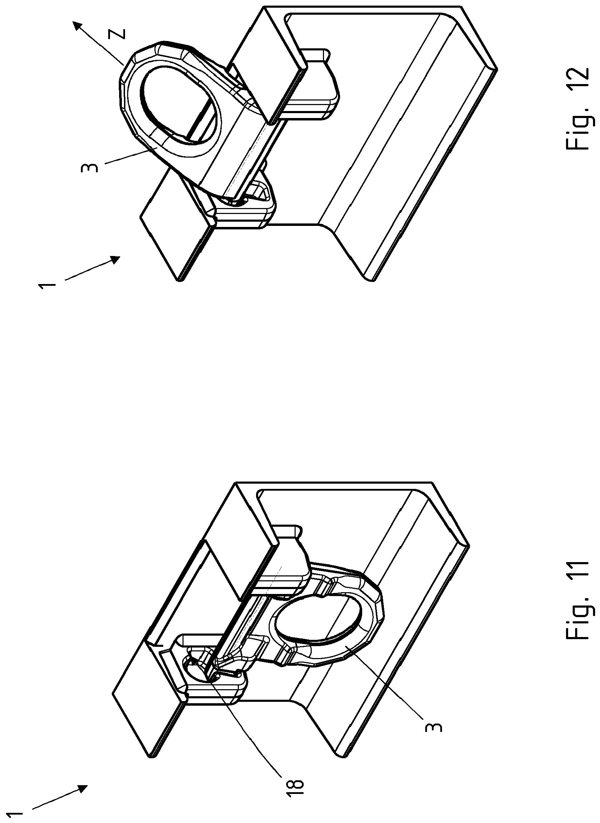

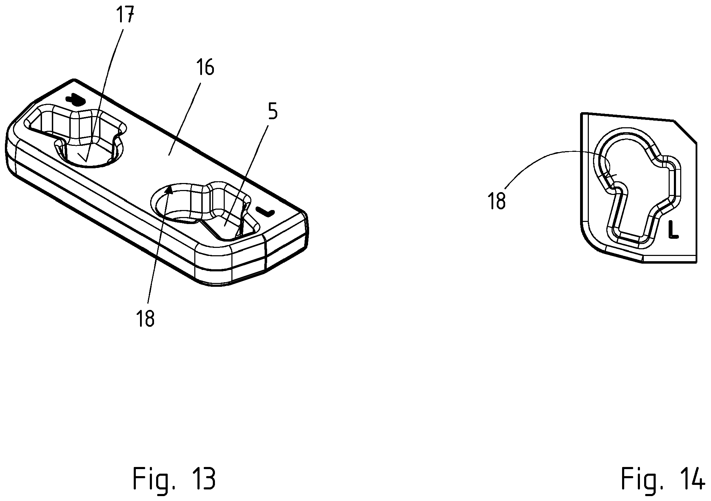

Figur 11 und 12 zeigen eine weitere Ausgestaltungsvariante. Diese ist analog zu Figuren 1 bis 10 ausgebildet. Hierbei sind jedoch die Kulissenbleche 6 einteilig als Schmiedebauteile 16 hergestellt. Dies ist zwar insofern mit höherem Fertigungsaufwand verbunden, bringt jedoch erfindungsgemäß den Vorteil mit sich, dass in den Kulissenblechen 6 durch den Schmiedevorgang die Festigkeit weiter gesteigert ist. Ferner können, wie in Figur 13 dargestellt, vorzugsweise die Kulissenbleche 6 als ein Schmiedebauteil 16 kostengünstig in einem Gesenk hergestellt werden und anschließend, wie in Figur 14 dargestellt, vereinzelt werden. Während des Schmiedeprozesses durchgreift die Kulissenführung 5 dann das Schmiedebauteil 16 nicht vollständig, sondern an einer Rückseite bzw. an einem Grund 17 bleibt Werkstoff vorhanden, so dass die Kulissenführung 5 nicht das Schmiedebauteil 16 vollständig durchgreifend ausgebildet ist.

Ein zweiter wesentlicher Vorteil ist in Figur 13 und 14 ersichtlich. Die nach innen gerichtete umlaufende Kante 18 ist abgerundet ausgebildet bzw. abgeschrägt oder abgeflacht ausgebildet. Die Kante 18 steht somit nicht scharfkantig hervor, wenn die Arme 4 des Ösenkörpers 3 in der Kulissenführung bewegt werden bzw. im Anschlag der Kulissenführung 5 mit einer Zugkraft Z beaufschlagt sind, so dass es hier durch die erfindungsgemäß abgerundete Kante 18 nicht zu einer Einschnürung bzw. Einkerbung im Bereich der Arme 4 des Ösenkörpers 3 kommt.

### Bezugszeichen:

1 - Zurrpunkt
2 - Ladefläche
3 - Ösenkörper
4 - Arme
5 - Kulissenführung
6 - Kulissenblech
7 - Rahmen
8 - Kulissenblech mit Kulissenführung
9 - Verstärkungsblech
10- Mittellängsebene
11 - Wand zu 7
12 - unterer schlitzförmiger Bereich
13 - oberer ringförmiger Bereich
14 - Nase
15 - Stütznocken
16 - Schmiedebauteil
17 - Grund zu 16
18 - Kante
S - Schwenkbewegung
Z - Zugkraft
α - Winkel

## Patentansprüche

1. Zurrpunkt (1) an einer Ladefläche (2) eines Transportfahrzeuges, wobei der Zurrpunkt (1) mit einem Zurrmittel gekoppelt wird, indem ein Ösenkörper (3) relativ beweglich in zwei seitlich angeordneten Kulissenblechen (6) gelagert ist und von einer Ruhestellung in eine Montage- oder Gebrauchsstellung bringbar ist, wobei der Ösenkörper (3) seitlich überstehende Arme (4) aufweist, die in die Kulissenführung (5) eingreifen, **dadurch gekennzeichnet, dass** die Kulisse zwei Bereiche (12, 13) aufweist, einen unteren schlitzartigen Bereich (12), dergestalt, dass der Ösenkörper (3) mit seiner Öse nach unten hängend in der Ruhestellung angeordnet ist, und einen zweiten oberen ringförmigen Bereich (13), dergestalt, dass der Ösenkörper (3) mittels einer Schwenkbewegung (S) in die Montagestellung bringbar ist, wobei der Ösenkörper (3) von dem unteren schlitzartigen Bereich (12) in den oberen ringförmigen Bereich (13) mittels einer translatorischen Bewegung herausziehbar ist.

2. Zurrpunkt (1) an einer Ladefläche (2) eines Transportfahrzeuges, wobei der Zurrpunkt (1) mit einem Zurrmittel gekoppelt wird, indem ein Ösenkörper (3) relativ beweglich in zwei seitlich angeordneten Kulissenblechen (6) gelagert ist und von einer Ruhestellung in eine Montage- oder Gebrauchsstellung bringbar ist, wobei der Ösenkörper (3) seitlich überstehende Arme (4) aufweist, die in die Kulissenführung (5) eingreifen, **dadurch gekennzeichnet, dass** der Ösenkörper (3) in der Ruhestellung mit der Öse nach unten in einem Winkel α größer 3 Grad, insbesondere zwischen 5 und 25 Grad, bevorzugt zwischen 10 und 20 Grad zu einer Vertikalen, hängend angeordnet ist.

3. Zurrpunkt (1) an einer Ladefläche (2) eines Transportfahrzeuges, wobei der Zurrpunkt (1) mit einem Zurrmittel gekoppelt wird, indem ein Ösenkörper (3) relativ beweglich in zwei seitlich angeordneten Kulissenblechen (6) gelagert ist und von einer Ruhestellung in eine Montage- oder Gebrauchsstellung bringbar ist, wobei der Ösenkörper (3) seitlich überstehende Arme (4) aufweist, die in die Kulissenführung (5) eingreifen, **dadurch gekennzeichnet, dass** die innenliegende umlaufende Kante (18) der Kulisse abgerundet oder abgeflacht ausgebildet ist.

4. Zurrpunkt (1) nach einem der vorhergehenden Ansprüche, **dadurch gekennzeichnet, dass** eine Mittellängsachse (10) des Ösenkörpers (3) in Ruhestellung in einem Winkel größer 3 Grad, insbesondere zwischen 5 und 25 Grad, bevorzugt zwischen 10 und 20 Grad zu einer Vertikalen angeordnet ist.

5. Zurrpunkt (1) nach einem der vorhergehenden Ansprüche, **dadurch gekennzeichnet, dass** in der Kulisse zwischen unterem Bereich (12) und oberem Bereich (13) eine in die Kulisse hervorragende Nase (14) ausgebildet ist, dergestalt, dass die Arme (4) des Ösenkörpers (3) in der Montagestellung an dem Nocken (15) gehalten sind.

6. Zurrpunkt (1) nach einem der vorhergehenden Ansprüche, **dadurch gekennzeichnet, dass** die Kulissenbleche (6) als Schmiedebauteil (16) hergestellt sind.

7. Zurrpunkt (1) nach einem der vorhergehenden Ansprüche, **dadurch gekennzeichnet, dass** die Kulissenbleche (6) zweilagig ausgebildet sind, wobei ein jeweils innenliegendes Kulissenblech (6) die Kulissenführung (5) aufweist und von außen ein Verstärkungsblech (9) auf das Kulissenblech (6) aufgebracht ist bzw. mit diesem gekoppelt ist.

8. Zurrpunkt (1) nach einem der vorhergehenden Ansprüche, **dadurch gekennzeichnet, dass** die Kulissenbleche (6) an ihrer oben zur Ladefläche (2) gerichteten Seite eine Schräge aufweisen.

## Geänderte Patentansprüche

### Geänderte Patentansprüche gemäss Regel 137(2) EPÜ.

1. Zurrpunkt (1) an einer Ladefläche (2) eines Transportfahrzeuges, wobei der Zurrpunkt (1) mit einem Zurrmittel gekoppelt wird, indem ein Ösenkörper (3) relativ beweglich in zwei seitlich angeordneten Kulissenblechen (6) gelagert ist und von einer Ruhestellung in eine Montage- oder Gebrauchsstellung bringbar ist, wobei der Ösenkörper (3) seitlich überstehende Arme (4) aufweist, die in die Kulissenführung (5) eingreifen, **dadurch gekennzeichnet, dass** die Kulisse zwei Bereiche (12, 13) aufweist, einen unteren schlitzartigen Bereich (12), dergestalt, dass der Ösenkörper (3) mit seiner Öse nach unten hängend in der Ruhestellung angeordnet ist, und einen zweiten oberen ringförmigen Bereich (13), dergestalt, dass der Ösenkörper (3) mittels einer Schwenkbewegung (S) in die Montagestellung bringbar ist, wobei der Ösenkörper (3) von dem unteren schlitzartigen Bereich (12) in den oberen ringförmigen Bereich (13) mittels einer translatorischen Bewegung herausziehbar istund eine Mittellängsachse (10) des Ösenkörpers (3) in Ruhestellung in einem Winkel größer 3 Grad zu einer Vertikalen angeordnet ist.

2. Zurrpunkt (1) nach einem der vorhergehenden Ansprüche, **dadurch gekennzeichnet, dass** eine Mittellängsachse (10) des Ösenkörpers (3) in Ruhestellung in einem Winkel zwischen 5 und 25 Grad, bevorzugt zwischen 10 und 20 Grad zu einer Vertikalen angeordnet ist.

3. Zurrpunkt (1) nach einem der vorhergehenden Ansprüche, **dadurch gekennzeichnet, dass** in der Kulisse zwischen unterem Bereich (12) und oberem Bereich (13) eine in die Kulisse hervorragende Nase (14) ausgebildet ist, dergestalt, dass die Arme (4) des Ösenkörpers (3) in der Montagestellung an dem Nocken (15) gehalten sind.

4. Zurrpunkt (1) nach einem der vorhergehenden Ansprüche, **dadurch gekennzeichnet, dass** die Kulissenbleche (6) als Schmiedebauteil (16) hergestellt sind.

5. Zurrpunkt (1) nach einem der vorhergehenden Ansprüche, **dadurch gekennzeichnet, dass** die Kulissenbleche (6) zweilagig ausgebildet sind, wobei ein jeweils innenliegendes Kulissenblech (6) die Kulissenführung (5) aufweist und von außen ein Verstärkungsblech (9) auf das Kulissenblech (6) aufgebracht ist bzw. mit diesem gekoppelt ist.

6. Zurrpunkt (1) nach einem der vorhergehenden Ansprüche, **dadurch gekennzeichnet, dass** die Kulissenbleche (6) an ihrer oben zur Ladefläche (2) gerichteten Seite eine Schräge aufweisen.

7. Zurrpunkt (1) nach einem der vorhergehenden Ansprüche, **dadurch gekennzeichnet, dass** eine innenliegende Kante (18) einer Kulisssenführung (5) abgerundet oder abgeflacht ausgebildet ist.
